# EUROPEAN PATENT APPLICATION

(11) **EP 1 925 854 A2**
(43) Date of publication of application: **28.05.2008**
(21) Application number: 07121229.4
(22) Date of filing: 21.11.2007
(51) Int. Cl.: F16H 55/16, F16H 55/17

(54) **Tooth profile, high contact ratio spur gear and method for forming such**

(30) Priority: 21.11.2006 US 602601
(71) Applicant: Deere & Company, Moline, IL 61265-8098 (US)
(72) Inventor: Cisek, Roman, Cedar Falls, IA 50613 (US); Lin, Jian, Waterloo, IA 50702 (US); White, Robert J, Waterloo, IA 50703 (US)
(74) Representative: Holst, Sönke

(57) **Abstract**

A tooth profile for a tooth (16, 18, 22, 24, 26, 32) of a high contact ratio spur gear (10, 12), the tooth (16, 18, 22, 24, 26, 32) having an active profile, a root (28), and a tip (30), the active profile having a start adjacent to the root (28) and having an end adjacent to the tip (30), includes a base tooth profile (36) extending from the start of the active profile to an operating pitch area of the high contact ratio spur gear (10, 12); and a modified base tooth profile (40), the modified base tooth profile (40) being the base tooth profile (36) modified by a profile relief curve (42), the modified base tooth profile (40) extending from the operating pitch area to the end of the active profile, thereby yielding a long profile modification.

## Description

The present invention relates to gearing, and, more particularly, to a tooth profile for a tooth of a high contact ratio spur gear. Furthermore this invention relates to a method for manufacturing such a tooth profile on a respective gear.

High contact ratio spur gears are widely used for power transmission, for example, in heavy equipment such as farming, construction, and forestry machinery. Contact ratios for high contact ratio spur gears are 2.0 or greater.

Advantages associated with high contact ratio spur gears relative to low contact ratio spur gears include higher power density and lower noise levels, when manufactured accurately, owing primarily to the fact that in high contact ratio spur gears, two pairs of teeth are in continuous contact, whereas for low contact ratio spur gears, only one pair of teeth may be in continuous contact.

High contact ratio spur gears transmit uniform motion under zero theoretical loading conditions, and transmit practically uniform motion under light load conditions. However, upon the application of substantial tooth loading, a non-uniformity of motion transmission is introduced, known in the art as transmission error, which increases with increasing tooth load. Transmission error results primarily from gear tooth deflection, including tooth bending, shear, tooth base rotation, and tooth deflection due to Hertzian contact stresses. At moderate and higher loads, transmission error increases noise levels and adversely affects tooth wear, hence tooth life.

In order to reduce transmission errors, tooth profile modifications have been proposed, which provide relief in the gear tooth active profile to compensate for the gear tooth deflection that causes transmission error. However, such schemes are generally effective only at near constant loading conditions, e.g., where the load, and hence tooth deflection, does not change substantially.

Hence, one object of the invention is to provide a tooth profile for a high contact ratio spur gear that may reduce transmission error over a range of loading conditions.

The invention, in one form thereof, is directed to a tooth profile for a tooth of a high contact ratio spur gear, the tooth having an active profile, a root, and a tip, the active profile having a start adjacent to the root and having an end adjacent to the tip. The tooth profile includes a base tooth profile extending from the start of the active profile to an operating pitch area of the high contact ratio spur gear; and a modified base tooth profile, the modified base tooth profile being the base tooth profile modified by a profile relief curve, the modified base tooth profile extending from the operating pitch area to the end of the active profile, thereby yielding a long profile modification. The base tooth profile might be an involute tooth profile. Furthermore the profile relief curve might be a parabolic curve or a linear curve or a parabolically modified linear curve. Furthermore the profile relief curve might provide a relief at said end of said active profile in a range of 0.010 millimeters to 0.050 millimeters. Said high contact ratio spur gear might have a tooth contact ratio in a range of 2.0 to 3.0. Furthermore said operating pitch area might be within one degree of roll angle of an operating pitch point of said high contact ratio spur gear.

The invention, in another form thereof, is directed to a high contact ratio spur gear having a modified tooth profile. The high contact ratio spur gear includes a plurality of gear teeth, each tooth of the plurality of gear teeth having an active profile, a root, and a tip. The active profile is defined by a start of the active profile adjacent to the root; and an end of the active profile adjacent to the tip. Each tooth includes a first tooth portion having a base tooth profile, the base tooth profile extending from the start of the active profile to an operating pitch area of the high contact ratio spur gear; and a second tooth portion having a modified base tooth profile, the modified base tooth profile being the base tooth profile modified by a profile relief curve, the modified base tooth profile extending from the operating pitch area to the end of the active profile, thereby yielding a long profile modification. Furthermore the tooth profile of this high contact ratio spur gear might have all other remaining features as described above.

The invention, in yet another form thereof, is directed to a method of manufacturing a high contact ratio spur gear. The method includes forming a plurality of gear teeth, each tooth of the plurality of gear teeth having an active profile, a root, and a tip, the active profile having a start adjacent to the root and having an end adjacent to the tip. Forming the plurality of gear teeth includes, for each tooth: forming a first tooth portion having a base tooth profile, the base tooth profile extending from the start of the active profile to an operating pitch area of the high contact ratio spur gear; and forming a second tooth portion having a modified base tooth profile, the modified base tooth profile being the base tooth profile modified by a profile relief curve, the modified base tooth profile extending from the operating pitch area to the end of the active profile, thereby yielding a long profile modification. Furthermore the method might comprise the forming of the gear teeth according to all other remaining features as described above with respect to the mentioned tooth profile.

FIG. 1 is a graphical depiction of a gear mesh employed in discussing embodiments of the present invention.

FIG. 2 is a graphical depiction of a gear tooth and corresponding profile chart in accordance with an embodiment of the present invention.

FIGS. 3-7 depict peak-to-peak transmission error plotted against pinion torque for various gear ratios and modules, which illustrates a reduction in transmission error for a tooth profile modification in accordance with the present invention as compared to the transmission error for another possible tooth profile modification and for an unmodified tooth profile.

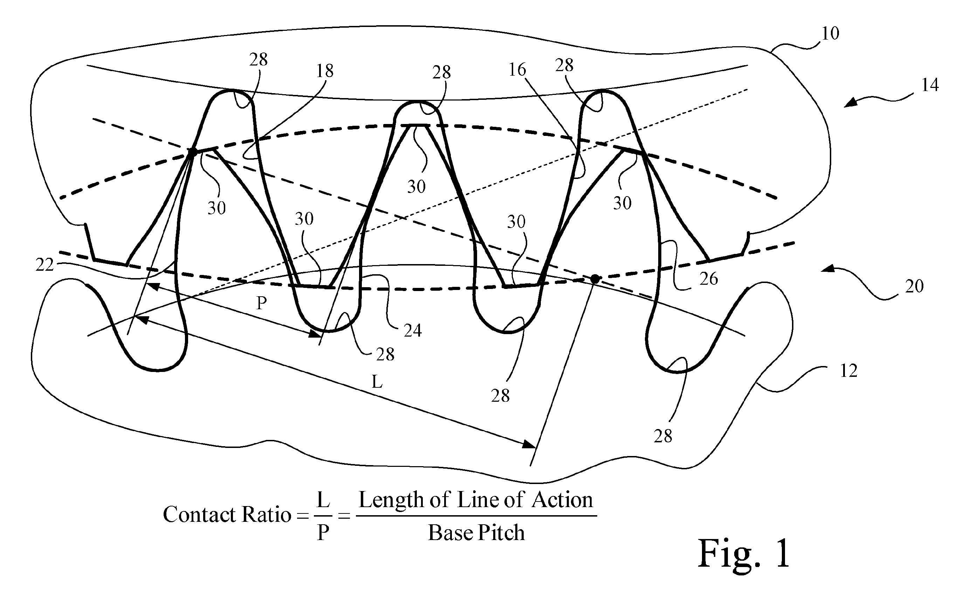

Referring now to FIG. 1, a gear 10 and a gear 12 in accordance with an embodiment of the present invention are depicted. Gear 10 has a plurality of gear teeth 14, of which a tooth 16 and a tooth 18 are depicted in full. Gear 12 includes a plurality of gear teeth 20, of which a tooth 22, a tooth 24, and a tooth 26 are depicted in full. Each of gears 10 and 12 are high contact ratio spur gears. The contact ratio of the gears is the ratio of the length of the line of action (L) to the base pitch (P), depicted in FIG. 1, as is known in the art. As depicted, each of gears 10 and 12 have a contact ratio of approximately 2.2. The present invention is particularly applicable to gears having a contact ratio in the range of 2.0 to 3.0.

Each tooth of gears 10 and 12 have a root 28 and a tip 30, and an active profile, which is that extent of the tooth's flank that contacts a tooth on the mating gear when the gears are rotated with each other in mesh. The start of the active profile is adjacent to root 28, and the end of the active profile is adjacent to tip 30. In the present embodiment, the active profile extends all the way up to tip 30, although it is alternatively contemplated that in other embodiments, an edge break be applied to tip 30, in which case the active profile ends at the edge break.

In accordance with an aspect of the present invention, the active profile is defined as a tooth profile having a base tooth profile and a modified tooth profile. The modified tooth profile is a modification of the base tooth profile.

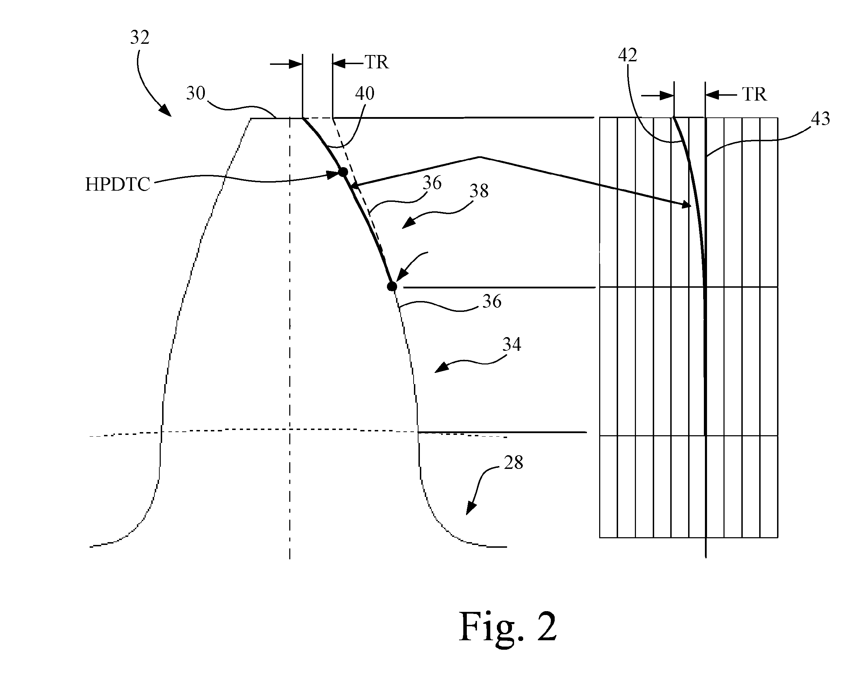

Referring now to FIG. 2, a gear tooth 32 and corresponding tooth profile in accordance with an embodiment of the present invention is depicted. Gear tooth 32 of FIG. 2 is an exemplary gear tooth that is representative of each gear tooth in plurality of gear teeth 14 and plurality of gear teeth 20. Gear tooth 32 includes a first tooth portion 34 having a base tooth profile 36 that extends from the start of the active profile, adjacent to root 28, to the operating pitch area of the gear. As used herein, "operating pitch area" is the operating pitch point of the gear, plus or minus a typical tolerance used in manufacturing high contact ratio spur gears, such as one degree of roll angle. Hence, for such a typical tolerance, the operating pitch area is that area of the gear tooth flank that is within one degree of roll angle of the operating pitch point of the gear. The operating pitch point of a gear is defined based on the operating pitch diameter of the gear. For the first gear, gear 10, the operating pitch diameter, OPP1, equals 2 x CD x N1/(N1 + N2), where CD is center distance between the gears, and N1, N2 are number of teeth of the mating gears, i.e., the number teeth in plurality of gear teeth 14 and the number of teeth in plurality of gear teeth 20, respectively. For the second gear, gear 12, the operating pitch diameter, OPP2, equals 2 x CD x N2/(N1 + N2). For each gear, the operating pitch point is that point on each gear tooth where the gear's operating pitch diameter intersects the active profile.

Gear tooth 32 also includes a second tooth portion 38 having a modified base tooth profile 40. Modified base tooth profile 40 extends from the operating pitch area to the end of the active profile adjacent to tip 30. Modified base tooth profile 40 is the base tooth profile 36 as modified by a profile relief curve 42, which provides tooth relief, i.e., a reduction in tooth thickness in the direction of rotation, relative to base profile curve 43 that defines the base tooth profile. As used herein, a profile relief curve is a curve defined on the profile chart for the base tooth profile.

Because the profile modification of the present invention begins at the operating pitch area of the gear, as opposed to beginning relatively close to the tooth tip, such as a profile modification that begins at the highest point of double tooth contact (HPDTC), the present inventive tooth profile is referred to herein as a Long Profile Modification (LPM) tooth profile. That is, because the present inventive profile modification is based on profile relief curve 42 that extends from the operating pitch area to the end of the active profile adjacent the tip, it represents a "long" modification of the base tooth profile, i.e., long in terms of distance from the start to end of the modification. In contrast, previous efforts to provide tooth profile relief typically start the relief around the highest point of double tooth contact (HPDTC), which is generally located only about one quarter the distance from the tooth tip toward the operating pitch point, and extend the relief to the tooth tip, which are hence, 'short' profile modifications.

In the present embodiment, the base tooth profile is an involute tooth profile, and hence, base profile curve 43 represents an involute profile, which is a straight line on the profile chart of an involute tooth profile. However, it is alternatively contemplated that other tooth forms may be employed without departing from the scope of the present invention.

By modifying base tooth profile 36 with profile relief curve 42, modified base tooth profile 40 includes tooth relief that compensates for the deflection of the gear teeth while operating under load. In the present embodiment, profile relief curve 42 is parabolic, as depicted in FIG. 2. It is alternatively considered that in another embodiment, profile relief curve 42 may be linear, which would yield an involute profile offset from the base tooth profile on the profile chart. As another alternative, it is contemplated that profile relief curve 42 may be a parabolically modified linear curve, that is, a linear curve that is modified by a parabolic curve so as to provide an amount of relief that increases with increasing closeness to the tip, relative to the relief provided by a pure linear curve on the profile chart. In either case, profile relief curve 42 is generated based on anticipated loading for the gear teeth. Preferably, profile relief curve 42 provides a relief at the end of the active profile, i.e., a tip relief, TR, in the range of .010 to .050 millimeters. The particular amount of tip relief for a given gear application is determined based on the anticipated tooth loading for the particular gear application, and other gear tooth parameters, such as the module and contact ratio.

As set forth above, modified base tooth profile 40, hence profile relief curve 42, extends from the operating pitch area of gear tooth 32 to the end of the active profile adjacent to tip 30. Although it is possible to start the profile modification at the HPDTC to yield a reduction in transmission error, the inventors have discovered that by starting the profile modification, i.e., profile relief curve 42, at the operating pitch area, i.e., yielding the LPM tooth profile, transmission error is much more significantly reduced.

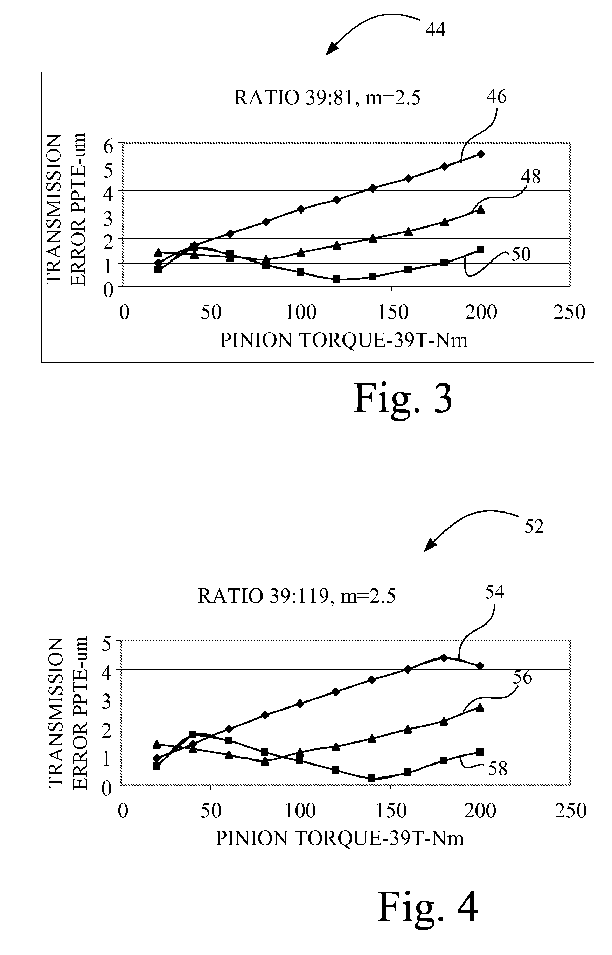

For example, referring now to FIG. 3, a graph 44 depicts the peak-to-peak transmission error (PPTE) for a steel gear set plotted against torque applied to the pinion. The gear set has a ratio of 39:81, a contact ratio of 2.55-2.80, and a module, m, of 2.5. Graph 44 includes an error curve 46, an error curve 48, and an error curve 50, which depict peak-to-peak transmission error, plotted in terms of micrometers, as against pinion torque (Newton-meters). Torque is applied to the 39-tooth pinion gear, and ranges from 20 Nm to 200 NM. Error curve 46 depicts the transmission error for a perfect involute tooth profile, and error curve 48 depicts the transmission error for gear teeth having the involute profile modified by applying a profile relief curve starting at the HPDTC (hereinafter, HPTDC modified tooth profile), and yielding a tip relief of TR = 0.020 millimeters. Error curve 50 depicts the transmission error for an LPM tooth profile in accordance with an embodiment of the present invention, wherein profile relief curve 42 extends from the operating pitch area of gear tooth 32 to the end of the active profile adjacent to tip 30, yielding a tip relief of TR = 0.020 millimeters.

It is seen in FIG. 3 that the PPTE of error curve 46 for a standard involute profile increases approximately linearly from about 1 micrometer at 20 NM torque to about 5.5 micrometers at 200 Nm torque. The transmission error of error curve 48 is reduced, relative to the standard involute profile, for most of the 20 Nm to 200Nm torque range, although the transmission error is somewhat greater than the standard involute profile between approximately 20 NM and 30 Nm pinion torque. At the peak torque of 200 Nm, the transmission error is approximately 3.2 micrometers for error curve 48, as compared to approximately 5.5 micrometers for the standard involute tooth profile, represented by error curve 46.

However, as seen in FIG. 3, the transmission error for the LPM tooth profile in accordance with an embodiment of the present invention, represented by error curve 50, is significantly reduced relative to the standard involute tooth profile, and also significantly reduced relative to the HPTDC modified tooth profile. For example, at approximately 120 Nm pinion torque, the transmission error for the tooth profile in accordance with an embodiment of the present invention is approximately 0.25 micrometers, as compared to approximately 3.7 micrometers for the standard involute tooth profile, and approximately 1.8 micrometers for the HPTDC modified tooth profile.

At lower torques in the range of approximately 30 to 65 Nm, it is seen that the transmission error of error curve 50 is slightly larger than that of error curve 48, whereas for the balance of the 20 Nm to 200 Nm torque range, the transmission error of error curve 50 substantially lower than that of error curve 48. This is significant, because the deleterious effects of transmission error, including vibration, noise, and tooth wear, increase with increasing torque, owing at least in part to the increasing amount of power being transmitted through the gears. Hence, it is more desirable to reduce the transmission error at higher power/torque conditions. Here, the reduction in transmission error achieved by the LPM tooth profile embodiment of the present invention is particularly beneficial. For example, as depicted in FIG. 3, where the transmission error illustrated by error curve 50 is only approximately 1.6 at 200 Nm pinion torque, whereas the transmission error for the standard involute (error curve 46) is approximately 5.5, and the transmission error for the HPTDC modified tooth profile (error curve 48) is approximately 3.2, which yields about twice the transmission error of the tooth profile in accordance with the LPM tooth profile. From FIG. 3, it is seen that the LPM tooth profile provides a substantial reduction in transmission error across most of the operating torque range of 20 Nm to 200 Nm, relative not only to the standard involute tooth profile, but also, relative to the HPTDC modified tooth profile, particularly, at moderate to high torque values. This substantial reduction is obtained even though the tip relief (TR) is the same 0.020 millimeters for the LPM tooth profile and for the HPTDC modified tooth profile.

Referring now to FIG. 4, a graph 52 depicts the peak-to-peak transmission error (PPTE) for another steel gear set, plotted against torque applied to the pinion. The gear set has a ratio of 39:119, a contact ratio of 2.65-2.80, and a module, m, of 2.5. Graph 52 includes an error curve 54, an error curve 56, and an error curve 58, which depict peak-to-peak transmission error plotted against pinion torque. Torque is applied to the 39-tooth pinion gear, and ranges from 20 Nm to 200 Nm. Error curve 54 depicts the transmission error for a perfect involute tooth profile, and error curve 56 depicts the transmission error for gear teeth having the HPTDC modified tooth profile with a tip relief of TR = 0.020 millimeters. Error curve 58 depicts the transmission error for the LPM tooth profile in accordance with an embodiment of the present invention, wherein profile relief curve 42 extends from the operating pitch area of gear tooth 32 to the end of the active profile adjacent to tip 30, and yields a tip relief of TR = 0.020 millimeters.

It is seen in FIG. 4 that the PPTE of error curve 54 for a standard involute profile increases approximately linearly from about 0.9 micrometer at 20 NM torque to about 4.4 micrometers at 180 Nm torque, and drops off to about 4.1 micrometers at 200 Nm torque. The transmission error of error curve 56 is reduced, relative to the standard involute profile represented by error curve 54, for most of the 20 Nm to 200Nm torque range, although the transmission error is somewhat greater than the standard involute profile between approximately 20 NM and 35 Nm pinion torque. At the peak torque of 200 Nm, the transmission error is approximately 2.7 micrometers for error curve 56, as compared to approximately 4.1 micrometers for the standard involute tooth profile, represented by error curve 54.

However, as seen in FIG. 4, the transmission error for a tooth profile in accordance with an embodiment of the present invention, represented by error curve 58, is significantly reduced relative to the standard involute tooth profile, and also significantly reduced relative to the HPTDC modified tooth profile. For example, at approximately 140 Nm pinion torque, the transmission error for the LPM tooth profile in accordance with the present invention is approximately 0.20 micrometers, as compared to approximately 1.6 micrometers for the standard involute tooth profile, and approximately 3.7 micrometers for the HPTDC modified tooth profile.

At lower torques in the range of approximately 30 to 90 Nm, it is seen that the transmission error of error curve 58 is slightly larger than that of error curve 56, whereas for the balance of the 20 Nm to 200 Nm torque range, the transmission error of error curve 58 substantially lower than that of error curve 56. In addition, From FIG. 4, it is seen that the LPM tooth profile provides a substantial reduction in transmission error across most of the operating torque range of 20 Nm to 200 Nm, relative not only to the standard involute tooth profile, but also, relative to the HPTDC modified tooth profile. In particular, it is seen that a substantial reduction in transmission error is achieved for the middle and upper portions of the operating torque range (moderate to high torque). This substantial reduction is obtained even though the tip relief (TR) is the same 0.020 millimeters for the LPM tooth profile and for the HPTDC modified tooth profile.

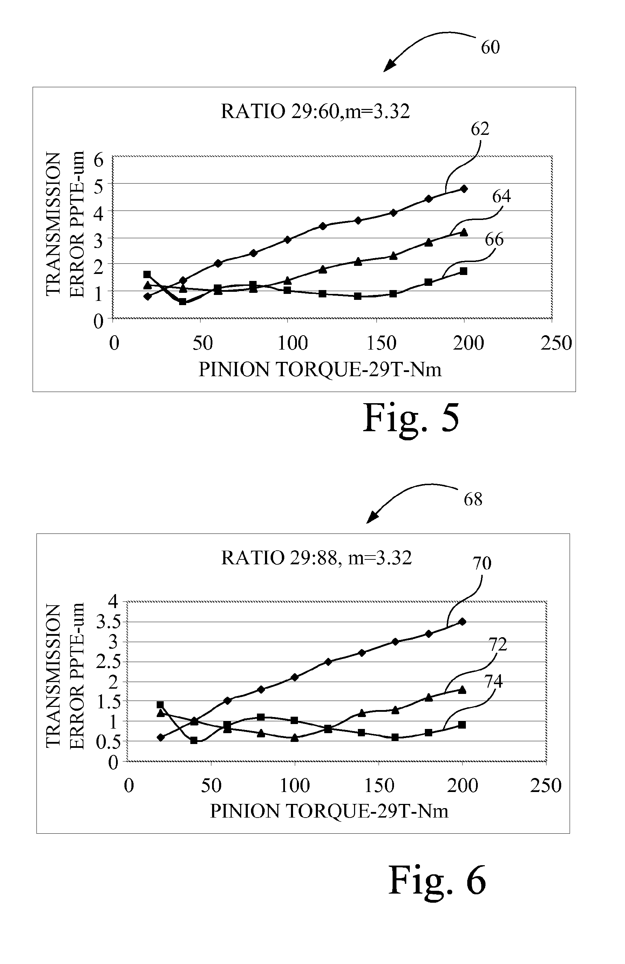

Referring now to FIG. 5, a graph 60 depicts the peak-to-peak transmission error (PPTE) for another steel gear set, plotted against torque applied to the pinion. The gear set has a ratio of 29:60, a contact ratio of 2.09-2.26, and a module, m, of 3.32. Graph 60 includes an error curve 62, an error curve 64, and an error curve 66, which depict peak-to-peak transmission error plotted against pinion torque. Torque is applied to the 29-tooth pinion gear, and ranges from 20 Nm to 200 NM. Error curve 62 depicts the transmission error for a perfect involute tooth profile, and error curve 64 depicts the transmission error for gear teeth having the HPTDC modified tooth profile with a tip relief of TR = 0.015 millimeters. Error curve 66 depicts the transmission error for the LPM tooth profile in accordance with an embodiment of the present invention, wherein profile relief curve 42 extends from the operating pitch area of gear tooth 32 to the end of the active profile adjacent to tip 30, yielding a tip relief of TR = 0.015 millimeters. As with FIGS. 3 and 4, it is seen in FIG. 5 that the LPM tooth profile in accordance with an embodiment of the present invention provides a substantial reduction in transmission error across most of the operating torque range of 20 Nm to 200 Nm, relative not only to the standard involute tooth profile, but also, relative to the HPTDC modified tooth profile. In particular, it is seen that a substantial reduction in transmission error is achieved for the middle and upper portions of the operating torque range.

Referring now to FIG. 6, a graph 68 depicts the peak-to-peak transmission error (PPTE) for another steel gear set, plotted against torque applied to the pinion. The gear set has a ratio of 29:88, a contact ratio of 2.22-2.23, and a module, m, of 3.32. Graph 68 includes an error curve 70, an error curve 72, and an error curve 74, which depict peak-to-peak transmission error plotted against pinion torque. Torque is applied to the 29-tooth pinion gear, and ranges from 20 Nm to 200 NM. Error curve 70 depicts the transmission error for a perfect involute tooth profile, and error curve 72 depicts the transmission error for gear teeth having the HPTDC modified tooth profile with a tip relief of TR = 0.015 millimeters. Error curve 74 depicts the transmission error for the LPM tooth profile in accordance with an embodiment of the present invention, wherein profile relief curve 42 extends from the operating pitch area of gear tooth 32 to the end of the active profile adjacent to tip 30, yielding a tip relief of TR = 0.015 millimeters. As with FIGS. 3-5, it is seen in FIG. 6 that the LPM tooth profile in accordance with an embodiment of the present invention provides a substantial reduction in transmission error across most of the operating torque range of 20 Nm to 200 Nm, relative not only to the standard involute tooth profile, but also, relative to the HPTDC modified tooth profile. In particular, it is seen that a substantial reduction in transmission error is achieved for the middle and upper portions of the operating torque range.

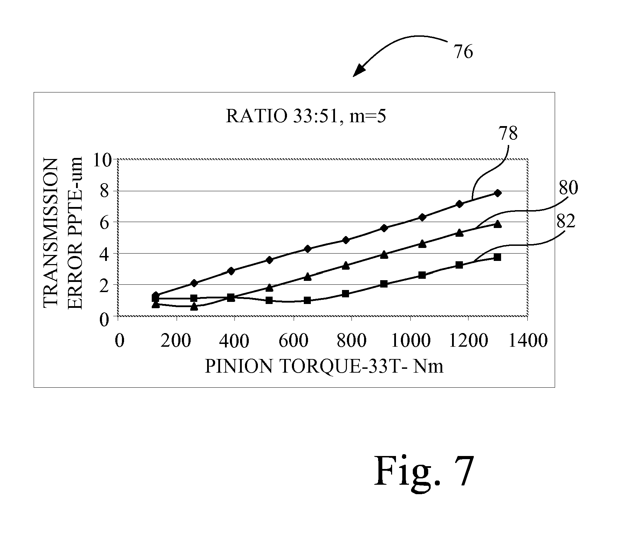

Referring now to FIG. 7, a graph 76 depicts the peak-to-peak transmission error (PPTE) for another steel gear set, plotted against torque applied to the pinion. The gear set has a ratio of 33:51, a contact ratio of 2.15-2.22, and a module, m, of 5.0. Graph 76 includes an error curve 78, an error curve 80, and an error curve 82, which depict peak-to-peak transmission error plotted against pinion torque. Torque is applied to the 33-tooth pinion gear, and ranges from approximately 170 Nm to 1320 NM. Error curve 78 depicts the transmission error for a perfect involute tooth profile, and error curve 80 depicts the transmission error for gear teeth having the HPTDC modified tooth profile with a tip relief of TR = 0.015 millimeters. Error curve 82 depicts the transmission error for the LPM tooth profile in accordance with an embodiment of the present invention, wherein profile relief curve 42 extends from the operating pitch area of gear tooth 32 to the end of the active profile adjacent to tip 30, yielding a tip relief of TR = 0.015 millimeters. As with FIGS. 3-6, it is seen in FIG. 7 that the LPM tooth profile in accordance with an embodiment of the present invention provides a substantial reduction in transmission error across most of the operating torque range of approximately 170 Nm to 1320 NM, relative not only to the standard involute tooth profile, but also, relative to the HPTDC modified tooth profile. In particular, it is seen that a substantial reduction in transmission error is achieved for the middle and upper portions of the operating torque range.

From the above description, it is seen that the long profile modification (LPM) in accordance with the present invention provides a reduction in transmission error relative to an unmodified involute tooth profile, and relative to a shorter profile modification, such as a modification starting at the highest point of double tooth contact.

Having described the preferred embodiment, it will become apparent that various modifications can be made without departing from the scope of the invention as defined in the accompanying claims.

## Claims

1. A tooth profile for a tooth (16, 18, 22, 24, 26, 32) of a high contact ratio spur gear (10, 12), said tooth (16, 18, 22, 24, 26, 32) having an active profile, a root (28), and a tip (30), said active profile having a start adjacent to said root (28) and having an end adjacent to said tip (30), said tooth profile comprising: a base tooth profile (36) extending from said start of said active profile to an operating pitch area of said high contact ratio spur gear (10, 12); and a modified base tooth profile (40), said modified base tooth profile (40) being said base tooth profile (36) modified by a profile relief curve (42), said modified base tooth profile (40) extending from said operating pitch area to said end of said active profile, thereby yielding a long profile modification.

2. The tooth profile of claim 1, wherein said base tooth profile (36) is an involute tooth profile.

3. The tooth profile of claim 1 or 2, wherein said profile relief curve (42) is parabolic.

4. The tooth profile of one of the claims 1 to 3, wherein said profile relief curve (42) is linear.

5. The tooth profile of one of the claims 1 to 4, wherein said profile relief curve (42) is a parabolically modified linear curve.

6. The tooth profile of one of the claims 1 to 5, wherein said profile relief curve (42) provides a relief at said end of said active profile in a range of 0.010 millimeters to 0.050 millimeters.

7. The tooth profile of one of the claims 1 to 6, wherein said operating pitch area is within one degree of roll angle of an operating pitch point of a high contact ratio spur gear (10, 12).

8. A high contact ratio spur gear (10, 12) having a modified tooth profile, comprising: a plurality of gear teeth (14, 20), each tooth (16, 18, 22, 24, 26, 32) of said plurality of gear teeth (14, 20) having a tooth profile according to one of the claims 1 to 7.

9. A high contact ratio spur gear (10, 12) according claim 8, wherein said high contact ratio spur gear (10, 12) has a tooth contact ratio in a range of 2.0 to 3.0.

10. A method of manufacturing a high contact ratio spur gear (10, 12), said method comprising: forming a plurality of gear teeth (14, 20), each tooth (16, 18, 22, 24, 26, 32) of said plurality of gear teeth (14, 20) having an active profile, a root (28), and a tip (30), said active profile having a start adjacent to said root (28) and having an end adjacent to said tip (30), wherein said forming said plurality of gear teeth (14, 20) includes for said each tooth (16, 18, 22, 24, 26, 32): forming a first tooth portion having a base tooth profile (36), said base tooth profile (36) extending from said start of said active profile to an operating pitch area of said high contact ratio spur gear (10, 12); and forming a second tooth portion (38) having a modified base tooth profile (40), said modified base tooth profile (40) being said base tooth profile (36) modified by a profile relief curve (42), said modified base tooth profile (40) extending from said operating pitch area to said end of said active profile, thereby yielding a long profile modification.

11. The method of claim 10, wherein said base tooth profile (36) is an involute tooth profile.

12. The method of claim 10 or 11, wherein said profile relief curve (42) is parabolic.

13. The method of one of the claims 10 to 12, wherein said profile relief curve (42) is linear.

14. The method of one of the claims 10 to 13, wherein said profile relief curve (42) is a parabolically modified linear curve.

15. The method of one of the claims 10 to 14, wherein said profile relief curve (42) provides a relief at said end of said active profile in a range of 0.010 millimeters to 0.050 millimeters.

16. The method of one of the claims 10 to 15, wherein said high contact ratio spur gear (10, 12) has a tooth contact ratio in a range of 2.0 to 3.0.

17. The method of one of the claims 10 to 16, wherein said operating pitch area is within one degree of roll angle of an operating pitch point of said high contact ratio spur gear (10, 12).
